# EUROPÄISCHE PATENTSCHRIFT

(11) **EP 1 216 551 B1**
(45) Veröffentlichungstag und Bekanntmachung des Hinweises auf die Patenterteilung: **26.04.2006**
(21) Anmeldenummer: 00981135.7
(22) Anmeldetag: 29.09.2000
(51) Int. Cl.: H04L 12/46, H04L 29/06

(54) **Methode zum Tunnel in nicht sequenzgesicherten Netzen**
Method for tunnelling in networks that are not sequence-protected
Procédé pour créer un tunnel dans de réseaux à sequences non securisées

(30) Priorität: 30.09.1999 DE 19946987
(43) Veröffentlichungstag der Anmeldung: 26.06.2002
(73) Patentinhaber: SIEMENS AKTIENGESELLSCHAFT, 80333 München (DE)
(72) Erfinder: GRADISCHNIG, Klaus, David, Reston, Va 20194-1977 (US); TÜXEN, Michael, 81479 München (DE); SCHWARZBAUER, Hanns, Jürgen, 82194 Gröbenzell (DE)
(86) Internationale Anmeldenummer: PCT/DE2000/003425
(87) Internationale Veröffentlichungsnummer: WO 2001/026319

(56) Entgegenhaltungen:
- US-A- 5 594 732
- BASSO A ET AL: "Real-time MPEG-2 delivery based on RTP: Implementation issues" SIGNAL PROCESSING. IMAGE COMMUNICATION,NL,ELSEVIER SCIENCE PUBLISHERS, AMSTERDAM, Bd. 15, Nr. 1-2, September 1999 (1999-09), Seiten 165-178, XP004180643 ISSN: 0923-5965

## Beschreibung

1. Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Ausführungsbeispiel[e] der Erfindung.

### Zu 1.

Viele Ubertragungsprotokolle der Ebene 2 setzen bei der darunterliegenden Übertragungsstrecke voraus, daß diese die Nachrichtenreihenfolge einhält, d.h. eine gesendete Nachricht kann eine zuvor gesendete Nachricht nicht überholen. Mit der immer weiter zunehmenden Verbreitung von IP Netzen entsteht der Wunsch, für viele Kommunikationsanwendungen (KA) eine Übertragungsstrecke durch ein IP Netz zu ersetzen, ohne oder mit nur minimaler Änderung der Kommunikationsprotokolle, die von der Kommunikationsanwendung verwendet werden.

### Zu 2.

Bisherige Lösungen beschreiten unterschiedliche Wege. Einer ist eine Gateway Lösung, bei der der Protokollstack der KA in einer Gateway bis zu einem bestimmten Niveau (zumindest bis Ebene 2) terminiert wird und KA-Nachrichten dann über IP basierte Protokolle an die remote Gateway weitergeleitet werden. Dazu gibt es z.B. für SS7 basierte KA Produkte auf dem Markt, z.B. von der Fa. Tekelek. Eine andere Lösung besteht im Austausch der unteren Ebenen des Protokollstacks der KA durch IP basierte Protokolle. Eine dritte Lösung besteht in einer Modifikation der bestehenden Ebene 2, sodaß sie auch in IP Netzen zum Einsatz kommen kann. Ein Beispiel dafür ist die z.Zt. bei ITU in Arbeit befindliche Empfehlung Q.2111, welche das in Q.2110 definierte SSCOP Protokoll u.a. für einen Einsatz in IP Netzen modifiziert. All diese Lösungen erfordern jedoch entweder eine teure Gatewaylösung, die ggf. auch noch protokollspezifisch sein könnte, oder aber eine Modifikation der bestehenden KA um diese "IP fähig" zu machen.

### Zu 3.

Der Erfindung liegt die Erkenntnis zugrunde, daß die Funktionen, welche eine gesicherte Nachrichtenübertragung gewährleisten, von den Funktionen, die eine korrekte Nachrichtenreihenfolge gewährleisten, getrennt werden und auf verscheidenen Plattformen realisiert werden können.

Die Erfindung löst das Problem derart, daß anstelle einer Gateway eine "Brücke" (Bridge) zum Einsatz kommt, welche das Ebene 2 Protokoll nicht terminiert sondern die PDUs des Protokolls transparent durch das IP Netz weiterleitet, d.h. durch das Netzwerk tunnelt. Dies wird auch in US5594732 offenbart, das die korrekte Nachrichtenreihenfolge jedoch nicht gewährleistet. Von einer Verwendung von TCP zur Sequenzsicherung wird dabei abgesehen, da dies eine "Verdoppelung" der vollständig gesicherten Übertragung durch das IP Netz durch TCP einerseits und das getunnelte Ebene 2 Protokoll andererseit darstellt, was auch eine unnötige Komplexität der Gateway verursacht. Ferner sind für viele zu tunnelnde Protokolle der Ebene 2 und deren Benutzer die durch TCP verursachten Retransmissiondelays nicht akzeptabel. Daher wird eine auf z.B. UDP und/oder IP basierte Lösung beschrieben. (Natürlich funktioniert diese Lösung und ihre Variante mit allen Datagramm-Protokollen.)

Die Erfindung wird durch die in den Ansprüchen 1 bzw. 3 angegebenen Merkmale gelöst.

Zusätzlich zum verwendeten Netzwerk-Protokol wird von der Bridge nur sichergestellt, daß sich keine PDUs überholen.

Diese Sicherstellung erfolgt durch Einführung von entsprechenden Sequenznummern in den durch den "Tunnel" gesendeten PDU. In der empfangenden Bridge wird die richtige Reihenfolge mittels der Sequenznummern überwacht. Wird eine Lücke festgstellt, wird eine gewisse Zeit gewartet, ob die fehlende(n) PDU(s) noch eintrifft bzw. eintreffen, bevor nachfolgende PDUs weitergeleitet werden. Kommen solch fehlende PDUs erst nach Ablauf der Wartezeit an, werden sie verworfen.

Es bleibt den die KA enthaltenen Knoten und dem dort realisierten Ebene 2 Protokoll überlassen, die fehelenden PDUs ggf. neu zu senden. Die Bridges selbst wiederholen keine PDUs. Um diese Wartezeit festzulegen, enthält jede Nachricht einen absoluten Zeitstempel, der angibt, wann die Nachricht gesendet wurde. Dabei wird davon ausgegangen, daß sowohl Sender und Empfänger (genügend) frequenzsynchrone Uhren haben; eine absolute Synchronität der Uhren ist jedoch nicht erforderlich. Damit ist der Empfänger in der Lage, bekannte und erprobte Methoden anzuwenden, um mittlere geschätzte Übertragungszeit und die geschätzte Varianz der Übertragungszeit zu ermitteln. Diese können dazu benutzt werden, mit gewisser Wahrscheinlichkeit die maximale zu erwartende Verzögerung einer Nachricht im Netzwerk zu schätzen. Diese Größe kann - zusammen mit dem Zeitstempeldann dazu verwendet werden, den Zeitpunkt zu berechen, bis zu dem man auf etwa noch fehlende Nachrichten wartet.

Durch Wahl wie man aus den beiden geschätzten Größen die maximal zulässige Verzögerung berechnet, kann die Performance des Tunnels optimiert werden, indem man die gewünschte Balance zwischen unnötigem Verwurf von PDUs (Wartezeit zu klein) und zu langer Verzögerung durch zu langes Warten auf verlorene PDUs (Wartezeit zu groß) trifft.

Durch zusätzliche Einführung eines relativen Zeitstempels, welcher die seit dem Aussenden der letzten PDU verstrichene Zeit angibt und jeder PDU mitgegeben werden kann, kann die Performance weiter optimiert werden, da dadurch festgestellt werden kann, wie lange sich eine noch fehlende Nachricht zumindest schon "verspätet" hat. Dabei kann man so vorgehen, daß beim Eintreffen einer PDU und einer bzw. mehreren (unmittelbar) davor fehlenden PDUs, durch die beiden Zeitstempel der Sendezeitpunkt der davor fehlenden PDU berechnet wird und dann mit obigem Verfahren entschieden wird, ob bzw. wie lange überhaupt noch auf sie gewartet werden sollte.

Selbstverständlich kann man mit weiteren zusätzlichen relativen Zeitstempeln das Verfahren weiter optimieren. Dies braucht nicht näher ausgeführt werden.

Ein Vorteil dieser Lösung besteht darin, daß eine Bridge wesentlich einfacher und billiger zu realisieren ist, als eine Gateway, da keine Protokolle terminiert weren müssen und weniger Speicherplatz benötigt wird. Ferner ist diese Lösung für praktisch alle Protokolle geeignet, obwohl bei manchen, wie z.B. dem MTP der Ebene 2, es vorteilhaft sein kann, protokollspezifische Prozeduren in der Bridge einzuführen, um das Senden überflüssiger PDUs (z.B. gewisser FISU) durch das IP Netz zu minimieren.

Eine Variante zum Einsatz der oben beschriebenen Lösung stellt die Realisierung der zusätzlichen Funktionen, welche ein "konventionelles" Protokoll IP-Netz-fähig machen (d.h. die Funktionen, welche eine mögliche Nachrichtenvertauschung der unteren Schichten abfangen), in einer separaten Bridge dar. Dabei entspricht das Prokoll, welches auf einer der Bridgeseiten verwendet wird, dem ursprünglichen, nicht IP-Netz-fähigem Protokoll (z.B. SSCOP gemäß Q.2110), während die andere Seite dem modifizierten Protokoll (im Beispiel also dem SSCOPMCE der Q.2111) entspricht. Im Vergleich zur ersten Variante wird die Bridge normalerweise komplexer werden, bleibt jedoch einfacher und billiger als eine Gateway, in der beide Protokolle, z.B. SSCOP und SSCOPMCE, realisiert werden müssen. Andererseits ist der Vorteil solch einer Lösung, daß diese Bridge direkt mit einer vollen Realisierung des modifizierten Protokolls (z.B. dem SSCOPMCE) kommunizieren kann. Dies kann von Vorteil sein, wenn einerseits kurzfristig eine rasche Umstellung einer KA auf Kommunikation über ein IP Netz nötig ist (dafür können die beschriebenen Bridges eingesetzt werden), wenn aber langfristig das modifizierte Protokoll direkt zum Einsatz kommen soll. Dann können nämlich Knoten mit dem neuen Protokoll in der Umstellungsphase weiterhin mit den über Bridges bediente Knoten kommunizieren.

### Zu 4.

Im folgenden werden Ausführungsbeispiele der Erfindung anhand der Zeichnung näher erläutert, wobei die Zeichnung 3 Figuren umfaßt.

a) Das Ausführungsbeispiel für die erste Lösungsvariante wird hier mit der angegebenen Möglichkeit der Performanceverbesserung beschrieben. Ebenso wird hier die Lösung auf der Basis des Protokolls UDP beschrieben. Der Einfachheit halber wird hier nur der Fall betrachtet, in dem ein Sender nur mit einer anderen Protokollmaschiene kommuniziert. Die Erweiterung auf mehrere Protokollmaschienen ist jedoch einfach durchführbar, indem man den Socket der Gegenseite zum Identifizieren der Kommunikation benutzt.

### Das Nachrichtenformat

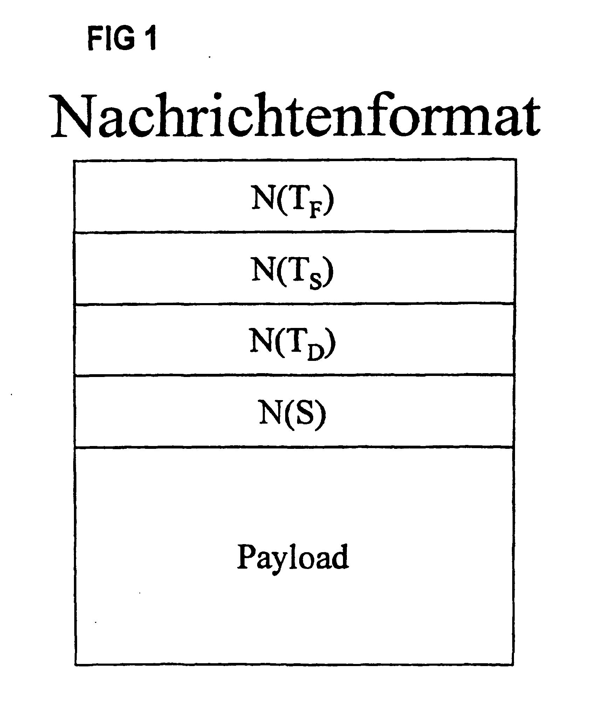

Hier wird das Format der Payload eines UDP-Datagrams beschrieben. Wie in Figur 1 dargestellt, enthält jede Nachricht die Zeit des Sendens N(T_{S}), die Zeitdifferenz N(T_{D}) zum Zeitpunkt des Sendens der vorherigen Nachricht, die Zeit N(T_{F}) des Sendens der ersten Nachricht für diese Kommunikationsbeziehung, eine Sequenznummer N(S) sowie die Userdaten. Dabei werden die Zeiten im 64-bit Format des NTP (RFC 958) angegeben. Die Sequenznummer umfaßt 32 Bits.

### Der Sender

Wird die erste Nachricht an die Gegenseite einer Verbindung gesendet, so speichert der Sender die Sendezeit dieser Nachricht in der Statusvariablen VT(T_{F}). Diese Zeit dient zum Identifizieren der Verbindung und wird bei allen Nachrichten im Feld N(T_{F}) eingetragen. Stürzt der Sender ab und wird danach neu gestartet, so kann die Gegenseite dies erkennen und alte Nachrichten verwerfen. Die Sendezeit der Nachricht wird im Feld N(T_{S}) eingetragen und im Sender in der Statusvariablen VT(T_{L}) abgespeichert. Mit Hilfe der Sendezeit der letzten Nachricht wird die Differenz zur aktuellen Zeit gebildet und in das Feld N(T_{D}) eingetragen. Ferner werden alle Nachrichten durchnummeriert. Dies erfolgt zyklisch und die Sequenznummer wird im Feld N(S) transportiert. Dazu benötigt der Sender die Statusvariable VT(S), die er mit 0 initialisiert.

### Der Emfpänger

Der Empfänger besitzt einen Resequencingbuffer, in dem er Nachrichten zwischenspeichert, die er nicht in der richtigen Reihenfolge erhält. Dieser Speicher kann bis zu VR(W) Nachrichten speichern. Die Statusvariable VR(S) enthält die Sequenznummer der nächsten in der richtigen Reihenfolge erwarteten Nachricht. Sie wird mit 0 initialisiert. Der Resequencingbuffer kann also die Nachrichten mit N(S)=VR(S), VR(S)+1, ... , VR(S)+VR(W)-1 speichern. (Die Arithmetik erfolgt in Z/(2^32)). Der Empfänger initialisiert die Statusvariable VR(T_{F}) mit 0. Diese Zeit liegt stets in der Vergangenheit. Empfängt der Empfänger eine Nachricht mit N(T_{F})<VR(T_{F}), so verwirft er die Nachricht. Gilt N(T_{F})>VR(T_{F}), so werden alle Nachrichten im Resequencingbuffer an die obere Protokollschicht übergeben, VR(S)=0 und V(T_{F})=N(T_{F}) gesetzt und dann die Nachricht normal verarbeitet.
Gilt N(T_{F})=VR(T_{F}), so wird die Nachricht wie folgt normal verarbeitet: Gilt N(S)=VR(S), so kann diese Nachricht an die obere Schicht gegeben werden und VR(S) inkrementiert werden. Gilt VR(S)<N(S)<VR(S)+VR(W), so wird die Nachricht in den Resequencingbuffer eingetragen. Dann berechnet man die Zeit, zu der diese Nachricht und die vorherige spätestens an die höhere Schicht übergeben werden muß. Liegt einer dieser Zeitpunkte in der Vergangenheit oder entspricht der aktuellen Zeit, so wird diese und alle Nachrichten mit geringerer Sequenznummer sofort an die höhere Schicht übergeben. Ferner wird VR(S) gleich N(S)+1 gesetzt. Liegen beide Zeiten in der Zukunft, so wird mittels eines Timers sichergestellt, daß die Nachricht zum erwarteten Zeitpunkt an die höhere Schicht übergeben wird. Läuft dieser Timer ab, so wird die entsprechende Nachricht an die höhere Schicht übergeben und VR(S) auf N(S)+1 gesetzt. Gilt VR(S)-2^31<=N(S)<VR(S), so wird die Nachricht als veraltet gewertet und verworfen. Gilt VR(S)+VR(W)<=N(S)<VR(S)+2^31, so ist die Nachricht neu. Alle Nachrichten im Resequencingbuffer mit N(S) zwischen VR(S) und N(S)-VR(W) werden an die obere Schicht übergeben. Dann wird VR(S) auf N(S)-VR(W)+1 gesetzt und die empfangene Nachricht abgespeichert. Ist bereits eine Nachricht mit N(S)=VR(S) enthalten, so wird diese an die obere Schicht übertragen und V(S) inkrementiert. Dann wird diese Überprüfung .

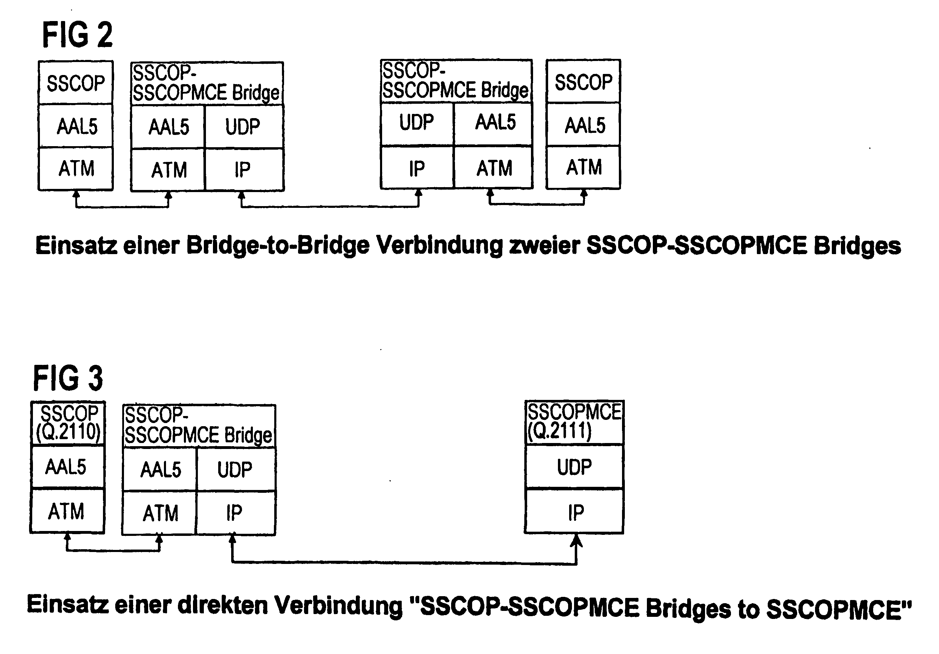

b) Als Ausführungsbeispiel für die zweite Lösungsvariante dienen die Protokolle nach Q.2110 und Q.2111. Die Figuren 2 und 3 zeigen die beiden möglichen Einsatzfälle. Wesentliche von der Bridge auszuführenden Funktionen sind wie folgt:
- Die Verbindungszustände müssen mitgeführt werden. Hier ist eine Vereinfachung möglich, in dem jede erhaltene ER bzw ERAK und RS bzw RSAK PDU dazu führt, daß die Bridge die Verbindung beidseitig durch das Aussenden von END PDUs beendet.
- Die zusätzlich in SSCOPMCE definierten Variablen und Timer müssen verwaltet werden.
- Gewisse bereits in SSCOP vorhandene Variable (z.B. VT(SQ), VR(SQ), VT(MS), VT(PS), VT(PA), VT(PS), VT(S), VR(H)) müssen mitgeführt werden.
- Neue, bridge-spezifische Variable VT(Soff) und VR(Soff), welche die Werte der bei Verbindungsbeginn durch den SSCOPMCE Empfänger und Sender verwendeten Sequenznummern VT(S) und VR(S) speichern, um die in den SD, STAT, USTAT und POLL PDUs enthaltenen Sequenznummern entsprechend anzupassen.
- Nachbilden des Zustandes des Empfangspuffers des SSCOP durch entspechende Auswertung der in der vom SSCOP erhaltenem STAT und USTAT PDUs enthaltenen Informationen. Dies ist wichtig um zu entscheiden, ob eine "alte" Nachricht vom SSCOP noch erwartet wird oder ob sie eine zu verwerfende Wiederholung ist, deren Empfang das SSCOP Protokoll in einen fehlerhaften Zustand versetzen würde.
- Verwalten eines Puffers, in dem vom IP Netz empfangene SD PDUs auf noch fehlende SD PDU warten

Details bzw. weitere Funktionen ergeben sich aus der Beschreibung unter 3. bzw. den Definitionen von SSCOP (Q.2110) und SSCOPMCE(Q.2111) und können bei Kenntnis dieser Informationen leicht ausgeführt werden.

## Patentansprüche

1. Verfahren zur Übertragung von Nachrichten einer Kommunikationsanwendung über Netze, demgemäß Nachrichten, die über ein Übertragungsprotokoll der Ebene 2 gesendet werden, das voraussetzt, dass die darunterliegende Übertragungsstrecke die Nachrichtenreihenfolge einhält, vor dem Betreten eines nichtsequenzgesicherten Netzes über eine Bridge geleitet werden, durch die sie über das nichtsequenzgesicherte Netz in einer für die Kommunikationsanwendung transparenten Weise weitergeleitet werden, **dadurch gekennzeichnet, dass** die genannten Nachrichten durch die Bridge mit Sequenznummern beaufschlagt werden, mit deren Hilfe die Funktion der Sequenzsicherung ermöglicht wird, und dadurch, dass die Bridge selbst keine Nachrichten wiederholt.

2. Verfahren nach Anspruch 1,
**dadurch gekennzeichnet, dass**
die Nachrichten der genannten Kommunikationsanwendung vor dem Verlassen des nichtsequenzgesicherten Netzes über eine weitere Bridge geführt werden, durch die die Funktion der Sequenzsicherung anhand der in den Nachrichten enthaltenen zusätzlichen Informationen durchgeführt wird.

3. Bridge, die
a) Nachrichten einer Kommunikationsanwendung, die über ein Übertragungsprotokoll der Ebene 2 gesendet werden, das voraussetzt, dass die darunterliegende
b) Übertragungsstrecke die Nachrichtenreihenfolge einhält, vor dem Betreten eines nichtsequenzgesicherten Netzes empfängt,
c) die empfangenen Nachrichten in einer für die Kommunikationsanwendung transparenten Weise über das nichtsequenzgesicherte Netz weiterleitet, **dadurch gekennzeichnet, dass** die Bridge die Nachrichten mit Sequenznummern beaufschlagt, mit deren Hilfe die Funktion der Sequenzsicherung ermöglicht wird und dadurch, dass die Bridge selbst keine Nachrichten wiederholt.

4. Bridge nach Anspruch 3,
**dadurch gekennzeichnet, dass**
die eine Seite der Bridge das SSCOP Protokoll (Q.2110) und die andere Seite der Bridge das Protokoll SSCOPMCE (Q.2111) verwendet, wobei die Bridge die Anpassung zwischen den beiden Protokollen vornimmt.

## Claims

1. Method for transmission of messages of a communications application over networks, in accordance with which messages which are sent via a layer-2 transmission protocol, which requires that the underlying transmission link adheres to the message sequence, before entering a non-sequence-secured network are routed via a bridge, through which the can be forwarded via a non-sequence-secured network in a transparent manner for the communication application, **characterized in that**, sequence numbers are applied to said messages by the bridge, with the aid of which the function of sequence securing is made possible and by the bridge itself not repeating any messages.

2. Method in accordance with claim 1,
**characterized in that**
the messages of the said communication application, before leaving the non-sequence-secured network, are routed via a further bridge, by which the function of sequence security is executed on the basis of the additional information contained in the messages.

3. Bridge which
a) receives messages of a communication application which are sent via a layer-2 transmission protocol which requires that the underlying transmission adheres to the transmission sequence before they enter a non-sequence-secured network,
c) forwards the received messages in a transparent manner for the communications application via the non sequence-secured network, **characterized in that** the bridge applies sequence numbers to the messages, with the aid of which the function of sequence security is enabled and that the bridge itself does not repeat any messages.

4. Bridge in accordance with claim 3,
**characterized in that**
the one side of the bridge uses the SSCOP protocol (Q.2110) and the other side of the bridge uses the protocol SSCOPMCE (Q.2111), with the bridge performing the conversion between the two protocols.

## Revendications

1. Procédé de transmission de messages dans une application de communication par l'intermédiaire de réseaux, selon lequel des messages qui sont émis via un protocole de transmission du niveau 2, qui présuppose que le trajet de transmission situé en dessous respecte l'ordre des messages, sont acheminés, avant l'entrée dans un réseau à séquences non protégées, par l'intermédiaire d'un pont (bridge) par lequel ils sont réacheminés, de manière transparente pour l'application de communication, par l'intermédiaire du réseau à séquences non protégées, **caractérisé en ce que** lesdits messages se voient attribuer par le pont des numéros de séquence à l'aide desquels la fonction de la protection de séquences est rendue possible et **en ce que** le pont lui-même ne répète pas de messages.

2. Procédé selon la revendication 1,
**caractérisé en ce que**
les messages de ladite application de communication, avant de quitter le réseau à séquences non protégées, sont acheminés par l'intermédiaire d'un autre pont par lequel la fonction de la protection de séquences est effectuée à l'aide des informations supplémentaires contenues dans les messages.

3. Pont qui
a) reçoit des messages d'une application de communication qui sont émis via un protocole de transmission du niveau 2 qui présuppose que le trajet de transmission situé en dessous respecte l'ordre des messages, avant l'entrée dans un réseau à séquences non protégées,
b) réachemine par l'intermédiaire du réseau à séquences non protégées, de manière transparente pour l'application de communication, les messages reçus, **caractérisé en ce que** le pont attribue aux messages des numéros de séquence à l'aide desquels la fonction de la protection de séquences est rendue possible et **en ce que** le pont lui-même ne répète pas de messages.

4. Pont selon la revendication 3,
**caractérisé en ce**
**qu'**un côté du pont utilise le protocole SSCOP (Q.2110) et l'autre côté du pont, le protocole SSCOPMCE (Q.2111), le pont opérant l'adaptation entre les deux protocoles.
